# EUROPEAN PATENT APPLICATION

(11) **EP 4 465 052 A1**
(43) Date of publication of application: **20.11.2024**
(21) Application number: 22920411.0
(22) Date of filing: 25.10.2022
(51) Int. Cl.: G01N 35/10, G01N 1/00

(54) **METHOD FOR MEASURING DISCHARGED AMOUNT OF DISPENSER**

(30) Priority: 14.01.2022 JP 2022004492
(71) Applicant: SHIMADZU CORPORATION, Kyoto-shi, Kyoto 604-8511 (JP)
(72) Inventor: KORENAGA, Akihito, Kyoto-shi, Kyoto 604-8511 (JP)
(74) Representative: Müller-Boré & Partner Patentanwälte PartG mbB
(86) International application number: PCT/JP2022/039737
(87) International publication number: WO 2023/135888

(57) **Abstract**

A dye-containing volatile liquid containing a dye at a predetermined concentration is prepared by dissolving the dye in a volatile liquid (step 11); the dye-containing volatile liquid is sucked by a dispenser and dispensed into a measurement container (step 12); the dye-containing volatile liquid dispensed into the measurement container is dried (step 13); after the drying, a predetermined amount of a low-volatility liquid having volatility lower than the volatility of the volatile liquid is added to the measurement container to dissolve the dye, thus preparing an evaluation liquid (step 14); optical measurement is performed on the evaluation liquid (step 15); and the dispensing amount which is a volume of the dye-containing volatile liquid dispensed into the measurement container is determined based on a measured value of the evaluation liquid by the optical measurement, an amount of the low-volatility liquid added, and a concentration of the dye in the dye-containing volatile liquid (step 16). This makes it possible to accurately measure the dispensing amount about a volatile liquid of a dispenser such as a micropipette.

## Description

### TECHNICAL FIELD

The present invention relates to a method for measuring a dispensing amount of a dispenser.

### BACKGROUND ART

In physicochemical experiments, in order to accurately dispense a liquid sample, reagent or the like, a piston dispenser (hereinafter, simply referred to as "dispenser"), such as a micropipette or an automatic dispensing device, is widely used. An error of the amount dispensed from such a dispenser may greatly affect subsequent results of the experiment, and thus it is necessary to periodically inspect whether the dispenser is functioning accurately. In the case of inspection of a micropipette, measurement of a dispensing amount by a weight method has been conventionally adopted (refer to, for example, Non Patent Literature 1). In the weight method, a standard liquid (for example, water) is sucked and dispensed by using a micropipette to be inspected, and the mass of the standard liquid dispensed is measured with an electronic balance. Then, based on the measured value at that time and the density of the standard liquid under the temperature at the time of measurement, the volume of the standard liquid dispensed from the micropipette is calculated. Thus, it is possible to confirm whether the micropipette can dispense an intended amount of the standard liquid (that is, accuracy of dispensing by the micropipette).

However, in the case of inspecting a dispenser having a plurality of channels such as a multi-channel automatic dispensing device by such a weight method, it is necessary to suck and dispense the standard liquid and measure the mass of the standard liquid for each channel as described above, which causes a problem of taking much time and effort.

Therefore, when inspecting such a dispenser having a plurality of channels, dispensing amount is measured by using a light absorbance measurement method (refer to, for example, Non Patent Literature 2).In the light absorbance measurement method, a standard liquid with a dye dissolved at a predetermined concentration is sucked in each channel of an automatic dispensing device to be inspected, and the standard liquid sucked in each channel is dispensed into respective wells of a microtiter plate. Thereafter, a preset amount of water is added to each well and mixed with the standard liquid, and then the light absorbance of the liquid in each well is measured by using a microplate reader. Then, the concentration of the dye in the liquid in each well is obtained by applying the measured value of the light absorbance to a calibration curve prepared previously, and the amount dispensed of the standard liquid from each channel is calculated based on the concentration, the amount of the water added, and the concentration of the dye in the standard liquid.

### CITATION LIST

### NON PATENT LITERATURE

Non Patent Literature 1: Akihisa Takao, "Case example of calibration and uncertainty evaluation of micropipette", [online], September 5, 2018, Japan Quality Assurance Organization, [searched on November 8, 2021], Internet <URL: https://unit.aist.go.jp/riem/ds-rg/uncertainty/download_file/2018_JAIMA01_06.pdf>
Non Patent Literature 2: "Agilent Bravo Automated Liquid Handling Platform: 96-Channel 250 µL Tip Accuracy and Precision Technical Overview", June 24, 2010, USA, Agilent Technologies, Inc., [searched on January 12, 2022], Internet <URL: https://www.agilent.com/cs/library/technicaloverviews/public/5990-3650en_lo%20CMS.pdf>

### SUMMARY OF INVENTION

### TECHNICAL PROBLEM

In the measurement of the dispensing amount using the conventional method, water is generally used as a standard substance. However, in this case, when dispensing a liquid having a characteristic significantly different from that of water, the accuracy of dispensing confirmed by the above method may not be guaranteed. For example, when a highly volatile liquid such as acetonitrile or acetone is dispensed by a dispenser, the amount dispensed may change due to a change in the internal pressure of the dispenser due to vapor generated from the liquid after the liquid is sucked. Therefore, even in a dispenser in which it has been confirmed that dispensing can be performed with sufficient accuracy by measurement with water as a standard substance, it is not always possible to dispense a volatile liquid with the same accuracy. Therefore, in order to accurately dispense such a volatile liquid, it is necessary to measure the dispensing amount with a liquid having the same characteristics as the liquid to be dispensed. However, in the weight method, the measured value of the electronic balance varies due to volatilization of the volatile liquid, and thus it is difficult to correctly measure the mass of the volatile liquid dispensed from the dispenser. In addition, in the method with light absorbance measurement as described above, the value of the calculated dispensing amount varies depending on the volatilization degree of the volatile liquid from the dispense of the volatile liquid with the dye added to the well to the addition of water to each well. In particular, in minute dispensing of sub-microliter to microliter order, an error of a measured value due to such volatilization becomes remarkable.

The present invention has been made in view of the above points, and an object of the present invention is to enable accurate measurement about a dispensing amount of a volatile liquid dispensed from a dispenser.

### SOLUTION TO PROBLEM

A method for measuring a dispensing amount of a dispenser according to the present invention made to solve the above problems, the method includes:
preparing a dye-containing volatile liquid containing a dye at a predetermined concentration by dissolving the dye in a volatile liquid;
sucking the dye-containing volatile liquid by the dispenser and dispensing the liquid into a measurement container;
drying the dye-containing volatile liquid dispensed into the measurement container;
adding, after the drying, a predetermined amount of a low-volatility liquid having volatility lower than the volatility of the volatile liquid to the measurement container to dissolve the dye, thus preparing an evaluation liquid;
performing optical measurement on the evaluation liquid; and
determining the dispensing amount which is a volume of the dye-containing volatile liquid dispensed into the measurement container based on a measured value of the evaluation liquid by the optical measurement, an amount of the low-volatility liquid added, and a concentration of the dye in the dye-containing volatile liquid.

### ADVANTAGEOUS EFFECTS OF INVENTION

The method for measuring a dispensing amount of a dispenser according to the present invention can accurately measure a dispensing amount of a volatile liquid dispensed from the dispenser.

### BRIEF DESCRIPTION OF DRAWINGS

[Fig. 1] Fig. 1 is a flowchart illustrating an execution procedure of a dispenser calibration method according to an embodiment of the present invention.
[Fig. 2] Fig. 2 is a graph illustrating a first calibration curve in an example of the present invention.
[Fig. 3] Fig. 3 is a graph illustrating a second calibration curve in the example of the present invention.

### DESCRIPTION OF EMBODIMENTS

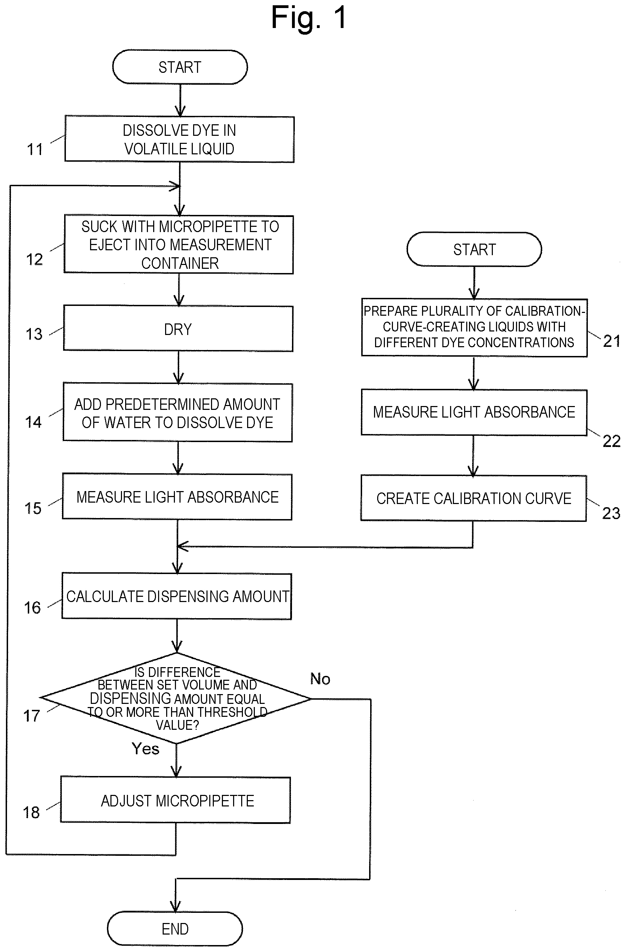

Hereinafter, embodiments for carrying out the present invention will be described with reference to the drawings. Fig. 1 is a flowchart illustrating an execution procedure of a dispenser calibration method according to the present embodiment. In the calibration method according to the present embodiment, a volatile liquid is sucked and dispensed by a micropipette in a predetermined set volume, an amount dispensed at that time is measured, and the amount dispensed is compared with the predetermined set volume to evaluate the accuracy of the dispensing amount of the micropipette. Further, if necessary, the micropipette is adjusted so that the volatile liquid can be dispensed with sufficient accuracy.

The volatile liquid in the present invention means a substance having a boiling point of 50 to 95 °C at 1 atm and being in a liquid state at normal temperature (20 °C ± 15 °C), or a liquid containing 10% or more of such a substance. Examples of the substance having a boiling point of 50 to 95 °C at 1 atm and being in a liquid state at normal temperature (20 °C ± 15 °C) include acetonitrile, methanol, ethanol, acetone, toluene, isopropanol, hexane, butanol, cyclohexane, ethylene glycol, benzene, chloroform, acetaldehyde, triethylamine, phenol, naphthalene, formaldehyde, tetrahydrofuran, and ethyl acetate.

In the method according to the present embodiment, first, a dye is added to and dissolved in a volatile liquid to prepare a liquid containing the dye at a predetermined concentration (step 11). Hereinafter, this liquid is referred to as "dye-containing volatile liquid". Examples of the dye include tartrazine or Coomassie Brilliant Blue (CBB) and the like, but the dye in the present invention is not limited to this. As the dye, it is preferable to use a dye having a viscosity close to that of the volatile liquid used for measuring the dispensing amount, and specifically, it is preferable to use a dye having a viscosity of ±30 % (desirably ± 15 %) of the volatile liquid, but the dye is not limited to this.

A micropipette to be evaluated is used to suck the dye-containing volatile liquid in a predetermined set volume and to dispense into a measurement container (step 12). As the measurement container, for example, a cuvette for spectroscopic measurement, a microtiter plate, or the like can be used, but any container may be used as long as it can be used for optical measurement.

Subsequently, the dye-containing volatile liquid dispensed into the measurement container is completely dried (step 13). The drying method is not particularly limited, but it is preferable to perform natural drying in order to eliminate the possibility of sublimating the dye by heating.

Then, a predetermined amount of water is added to the measurement container, and the dye is dissolved in the water (step 14). An aqueous solution of the dye thus obtained is hereinafter referred to as "evaluation liquid".

The measurement container is set in a spectrophotometer, and the light absorbance of the evaluation liquid at an absorption wavelength of the dye is measured (step 15). When a microtiter plate is used as the measurement container, a microplate reader is used as the spectrophotometer.

In addition, a plurality of calibration-curve-creating liquids which are aqueous solutions containing different concentrations of each of the same dye as the dye contained in the evaluation liquid are prepared (step 21), and the light absorbance of each calibration-curve-creating liquid is measured in the same manner (step 22). In step 15 described above, the plurality of calibration-curve-creating liquids may be set in a spectrophotometer together with the evaluation liquid, and the light absorbance measurement of the evaluation liquid and the light absorbance measurement of the plurality of calibration-curve-creating liquids may be continuously performed.

Then, a calibration curve indicating the relationship between the concentration of the dye and the light absorbance is created based on the measurement results of the plurality of calibration-curve-creating liquids, and the concentration of the dye in the calibration curve is converted into the volume of the dye-containing volatile liquid (that is, a theoretical value of the dispensing amount about the dye-containing volatile liquid of the micropipette) based on the concentration of the dye in the dye-containing volatile liquid and the amount of water added in step 14. As a result, a calibration curve indicating the relationship between the light absorbance and the dispensing amount (theoretical value) is obtained (step 23).

Subsequently, the light absorbance of the evaluation liquid measured in step 15 is applied to the calibration curve created in step 23 to specify the dispensing amount about the dye-containing volatile liquid of the micropipette (step 16).

Herein, in step 23, the calibration curve indicating the relationship between the light absorbance and the concentration of the dye is created, and the calibration curve is converted into the calibration curve indicating the relationship between the light absorbance and the dispensing amount, but the present invention is not limited to this, and in step 23, only the calibration curve indicating the relationship between the light absorbance and the concentration of the dye may be created. In this case, in step 16, the concentration of the dye in the evaluation liquid is specified based on the calibration curve and the light absorbance of the evaluation liquid measured in step 15, and based on the value, the concentration of the dye in the dye-containing volatile liquid, and the amount of water added in step 14, the dispensing amount about the dye-containing volatile liquid is calculated.

As described above, in the method according to the present embodiment, the step of drying the dye-containing volatile liquid dispensed from the dispenser is included to allow the fluctuation of the measured value due to the volatilization degree of the volatile liquid to be eliminated. Therefore, the method according to the present embodiment can always accurately measure the dispensing amount, even for a trace amount of the volatile liquid.

Subsequently, the set volume of the micropipette in step 12 is compared with the dispensing amount in step 16 to determine whether or not the difference between them is equal to or more than a predetermined threshold (step 17). Then, when the difference is smaller than the threshold value (that is, in a case of No in step 17), the series of operations is terminated as it is.

On the other hand, when the difference is equal to or more than a predetermined threshold (that is, when Yes in step 17), a micropipette is adjusted such that the difference becomes small (step 18). Specifically, while finely adjusting an adjustment dial or the like provided on the micropipette, steps 12 to 18 are repeatedly performed, and a series of operations is terminated when No is obtained in step 17.

As described above, the embodiments for carrying out the present invention have been described. However, the present invention is not limited to the above-described embodiments, and may be appropriately changed within the scope of the present invention.

For example, in the above embodiment, the dispensing amount of micropipette is measured, but instead of this, the dispensing amount of another dispenser, for example, an automatic dispensing device may be measured. In addition, examples of the dispenser include a single-channel dispenser including only one set of a cylinder, a piston that operates in the cylinder, and a tip attachment portion provided at a tip of the cylinder, and a multi-channel dispenser including a plurality of sets of the cylinder, the piston, and the tip attachment portion, and the present invention can be applied to any of these. Further, examples of the dispenser include various types of dispensers such as a manual type in which a piston is operated by a user, an automatic type in which the piston is driven by a motor, an air replacement type in which a certain amount of air exists between the piston and the liquid, a forced replacement type in which the piston directly contacts the liquid, a fixed volume type in which an dispensing amount (set volume) is constant, and a variable volume type in which the dispensing amount is changeable, and the measurement method of the dispensing amount and the calibration method according to the present invention can be applied to any of these. When the calibration method according to the present invention is applied to an automatic dispenser, in step 18, adjustment of the dispenser is performed by changing a relationship between a set volume and a motor drive amount stored in the dispenser or a computer for controlling the dispenser.

In addition, in the above embodiment, the light absorbance of the evaluation liquid is measured in step 15, but the "optical measurement" in the present invention is not limited to the light absorbance measurement, and may be any measurement such as fluorescence measurement or transmittance measurement. When fluorescence measurement is performed as optical measurement, a dye to emit fluorescence is used as the dye. In addition, in this case, in the description of steps 15 and 16 and steps 22 and 23 in the above embodiment, "light absorbance" is replaced with "fluorescence intensity".

In addition, in the above embodiment, water is used as the low-volatility liquid in the present invention (that is, in step 14, water is added to the evaluation container to dissolve the dye), but other low-volatility liquids may be used instead of water. The low-volatility liquid in the present invention means a substance that has a boiling point of higher than 95 °C at 1 atm and is in a liquid state at normal temperature (20 °C ± 15 °C). Examples of such a low-volatility liquid include, in addition to water, dimethyl sulfoxide, glycerin, and phenol.

### EXAMPLES

The dispensing amount of each channel (48 channels) of the multi-channel automatic dispensing device was measured by using the measurement method of the dispensing amount according to the present invention.

### 1. Preparation of Dye-containing Volatile Liquid

To 25 mL of water was added and dissolved 0.5 g of tartrazine as a dye to prepare a 20 g/L aqueous tartrazine solution, and the aqueous tartrazine solution and acetonitrile were further mixed at a ratio of 3 : 7. The mixed liquid (tartrazine concentration: 6000 mg/L) thus obtained is hereinafter referred to as "dye-containing volatile liquid".

### 2. Preparation of Calibration-Curve-Creating Liquid

A 20 g/L aqueous tartrazine solution and water were mixed at a ratio of 3 : 7 to prepare a 6 g/L aqueous tartrazine solution. Further, the aqueous tartrazine solution was diluted 30 times to 360 times with water to prepare 6 types of aqueous solutions having different concentrations of tartrazine (hereinafter referred to as "dye"). These 6 types of aqueous solutions are hereinafter referred to as "calibration-curve-creating liquid".

### 3. Light Absorbance Measurement and Calculation of Dispensing Amount

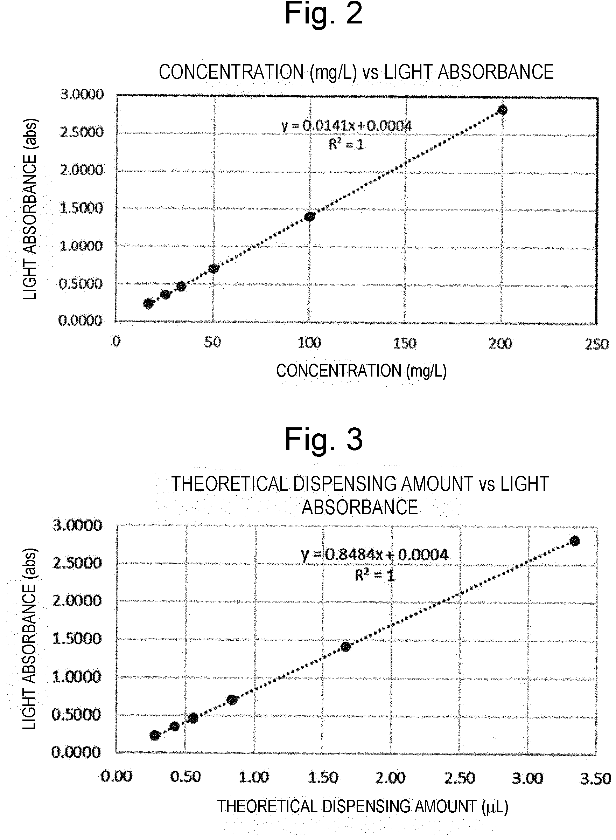

(1) Using a multi-channel automatic dispensing device, the dye-containing volatile liquid was simultaneously dispensed from each channel to each well of the microtiter plate for light absorbance measurement, and then dried.
(2) 100 µL of water was added to each well after drying, and was stirred with a shaker. The aqueous solution of the dye thus obtained is hereinafter referred to as "evaluation liquid".
(3) 100 µL of each calibration-curve-creating liquid was dispensed into each of 2 wells, the well being different from the well containing the evaluation liquid.
(4) To other 2 wells, 100 µL of water was dispensed as a blank.
(5) The microtiter plate was set in a microplate reader, and the light absorbance at an absorption wavelength (426 nm) of the dye was measured.
(6) The average value of the measured values of the blank was subtracted from the measured value (light absorbance) for each well obtained by the light absorbance measurement.
(7) Based on the dye concentration (mg/L) in each calibration-curve-creating liquid and the value obtained in (6), a calibration curve (Fig. 2) indicating the relationship between the light absorbance and the dye concentration was created by the least squares method.
(8) The calibration curve was converted into a calibration curve (Fig. 3) indicating the relationship between the light absorbance and the theoretical amount dispensed by converting the dye concentration (mg/L) into the theoretical amount dispensed (µL) according to the following formula. Theoretical amount dispensed (µL) = {dye concentration (mg/L) × liquid amount in well (100µL)}/dye concentration in dye-containing volatile liquid (6000 mg/L)
(9) From the measured value (light absorbance) of the evaluation liquid in the light absorbance measurement, the theoretical amount of the dye-containing volatile liquid dispensed from each channel was calculated by using the calibration curve of (8).

Table 1 shows the measured values (light absorbances N1 and N2) of each of the calibration-curve-creating liquids described above, and the inverse regression value and the trueness calculated from the calibration curve (Fig. 2) created based on the measured values.

**[Table 1]**

| **Concentration (mg/L)** | **Light absorbance N1** | **Light absorbance N2** | **Average light absorbance - Average blank** | **Inverse regression value (mg/L)** | **Trueness** |
|---|---|---|---|---|---|
| 200.0 | 2.8915 | 2.8516 | 2.8310 | 200.2 | 100.1% |
| 100.0 | 1.4505 | 1.4459 | 1.4077 | 99.5 | 99.5% |
| 50.0 | 0.7503 | 0.7503 | 0.7098 | 50.2 | 100.3% |
| 33.3 | 0.5140 | 0.5118 | 0.4724 | 33.4 | 100.1% |
| 25.0 | 0.3950 | 0.3959 | 0.3549 | 25.1 | 100.3% |
| 16.7 | 0.2764 | 0.2774 | 0.2364 | 16.7 | 100.1% |
| Blank | 0.0403 | 0.0408 | - | | |

The measured values of the light absorbance of the evaluation liquid in each well of the microtiter plate are shown in Table 2 ("Ch number" in the table indicates the number of the channel of the automatic dispensing device that dispensed the dye-containing volatile liquid into each well).

**[Table 2]**

| **Ch number** | **1** | **2** | **3** | **4** | **5** | **6** |
|---|---|---|---|---|---|---|
| **1** | 1.2048 | 1.3956 | 1.2052 | 1.3849 | 1.2395 | 1.1482 |
| **2** | 1.1954 | 1.5228 | 1.4751 | 1.3456 | 1.3575 | 1.3736 |
| **3** | 1.4508 | 1.3484 | 1.3747 | 1.4318 | 1.3733 | 1.3449 |
| **4** | 1.368 | 1.4749 | 1.4238 | 1.2929 | 1.3085 | 1.3108 |
| **5** | 1.2268 | 1.309 | 1.4489 | 1.3694 | 1.3585 | 1.2336 |
| **6** | 1.2649 | 1.3402 | 1.3651 | 1.3085 | 1.2812 | 1.307 |
| **7** | 1.2393 | 1.2953 | 1.29 | 1.3224 | 1.3769 | 1.2487 |
| **8** | 1.1079 | 1.0298 | 1.0316 | 1.065 | 1.0653 | 1.0598 |

The measured values of the light absorbances in Table 2 were converted into theoretical amounts dispensed by using the calibration curve of Fig. 3, and the results are shown in Table 3. A numerical value in each cell in this table corresponds to a theoretical amount of the dye-containing volatile liquid dispensed from each channel of the automatic dispensing device (that is, a dispensing amount measured by the method according to the present invention).

**[Table 3]**

| **Ch number** | **1** | **2** | **3** | **4** | **5** | **6** |
|---|---|---|---|---|---|---|
| **1** | 1.372 | 1.597 | 1.372 | 1.584 | 1.413 | 1.305 |
| **2** | 1.361 | 1.747 | 1.690 | 1.538 | 1.552 | 1.571 |
| **3** | 1.662 | 1.541 | 1.572 | 1.639 | 1.570 | 1.537 |
| **4** | 1.564 | 1.690 | 1.630 | 1.476 | 1.494 | 1.497 |
| **5** | 1.398 | 1.495 | 1.660 | 1.566 | 1.553 | 1.406 |
| **6** | 1.443 | 1.531 | 1.561 | 1.494 | 1.462 | 1.492 |
| **7** | 1.412 | 1.478 | 1.472 | 1.510 | 1.575 | 1.424 |
| **8** | 1.258 | 1.166 | 1.168 | 1.207 | 1.207 | 1.201 |

### [Modes]

It is understood by those skilled in the art that the plurality of exemplary embodiments described above are specific examples of the following modes.

(Clause 1) A method for measuring a dispensing amount of a dispenser according to a mode of the present invention, includes:
preparing a dye-containing volatile liquid containing a dye at a predetermined concentration by dissolving the dye in a volatile liquid;
sucking the dye-containing volatile liquid by the dispenser and dispensing the liquid into a measurement container;
drying the dye-containing volatile liquid dispensed into the measurement container;
adding, after the drying, a predetermined amount of a low-volatility liquid having volatility lower than the volatility of the volatile liquid to the measurement container to dissolve the dye, thus preparing an evaluation liquid;
performing optical measurement on the evaluation liquid; and
determining the dispensing amount which is a volume of the dye-containing volatile liquid dispensed into the measurement container based on a measured value of the evaluation liquid by the optical measurement, an amount of the low-volatility liquid added, and a concentration of the dye in the dye-containing volatile liquid.

(Clause 2) The method for measuring a dispensing amount of a dispenser according to Clause 1, may include:
making a plurality of calibration-curve-creating liquids prepared by dissolving the dye in the low-volatility liquid at different concentrations;
performing optical measurement on each of the plurality of calibration-curve-creating liquids;
creating a calibration curve based on measurement results of the plurality of calibration-curve-creating liquids by the optical measurements; and
determining the dispensing amount from a measured value of the evaluation liquid by the optical measurement using the calibration curve.

In the method for measuring a dispensing amount of a dispenser according to Clause 1 or 2, it is possible to always accurately measure the dispensing amount without being affected by volatilization of a volatile liquid.

(Clause 3) In the method for measuring a dispensing amount of a dispenser according to Clause 1 or 2, the dispenser may be a multi-channel dispenser.

In the method for measuring a dispensing amount of a dispenser according to Clause 3, it is possible to measure the dispensing amount of each channel of a multi-channel dispenser at a time, and thus it is possible to reduce time and effort required for measuring the dispensing amount.

(Clause 4) A method for calibrating a dispenser according to a mode of the present invention, includes:
preparing a dye-containing volatile liquid containing a dye at a predetermined concentration by dissolving the dye in a volatile liquid;
sucking the dye-containing volatile liquid in a predetermined set volume by the dispenser and dispensing the liquid into a measurement container;
drying the dye-containing volatile liquid dispensed into the measurement container;
adding, after the drying, a predetermined amount of a low-volatility liquid having volatility lower than the volatility of the volatile liquid to the measurement container to dissolve the dye, thus preparing an evaluation liquid;
performing optical measurement on the evaluation liquid;
determining the dispensing amount which is a volume of the dye-containing volatile liquid dispensed into the measurement container based on a measured value of the evaluation liquid by the optical measurement, an amount of the low-volatility liquid added, and a concentration of the dye in the dye-containing volatile liquid;
specifying a difference between the determined dispensing amount and the set volume; and
adjusting the dispenser so as to reduce the difference.

In the method for calibrating a dispenser according to Clause 4, it is possible to always provide accurate calibration without being affected by volatilization of a volatile liquid.

## Claims

1. A method for measuring a dispensing amount of a dispenser, comprising:
preparing a dye-containing volatile liquid containing a dye at a predetermined concentration by dissolving the dye in a volatile liquid;
sucking the dye-containing volatile liquid by the dispenser and dispensing the liquid into a measurement container;
drying the dye-containing volatile liquid dispensed into the measurement container;
adding, after the drying, a predetermined amount of a low-volatility liquid having volatility lower than the volatility of the volatile liquid to the measurement container to dissolve the dye, thus preparing an evaluation liquid;
performing optical measurement on the evaluation liquid; and
determining the dispensing amount which is a volume of the dye-containing volatile liquid dispensed into the measurement container based on a measured value of the evaluation liquid by the optical measurement, an amount of the low-volatility liquid added, and a concentration of the dye in the dye-containing volatile liquid.

2. The method for measuring a dispensing amount of a dispenser according to claim 1, comprising:
making a plurality of calibration-curve-creating liquids prepared by dissolving the dye in the low-volatility liquid at different concentrations;
performing optical measurement on each of the plurality of calibration-curve-creating liquids;
creating a calibration curve based on measurement results of the plurality of calibration-curve-creating liquids by the optical measurements; and
determining the dispensing amount from a measured value of the evaluation liquid by the optical measurement using the calibration curve.

3. The method for measuring a dispensing amount of a dispenser according to claim 1, wherein the dispenser is a multi-channel dispenser.

4. A method for calibrating a dispenser, comprising:
preparing a dye-containing volatile liquid containing a dye at a predetermined concentration by dissolving the dye in a volatile liquid;
sucking the dye-containing volatile liquid in a predetermined set volume by the dispenser and dispensing the liquid into a measurement container;
drying the dye-containing volatile liquid dispensed into the measurement container;
adding, after the drying, a predetermined amount of a low-volatility liquid having volatility lower than the volatility of the volatile liquid to the measurement container to dissolve the dye, thus preparing an evaluation liquid;
performing optical measurement on the evaluation liquid;
determining the dispensing amount which is a volume of the dye-containing volatile liquid dispensed into the measurement container based on a measured value of the evaluation liquid by the optical measurement, an amount of the low-volatility liquid added, and a concentration of the dye in the dye-containing volatile liquid;
specifying a difference between the determined dispensing amount and the set volume; and
adjusting the dispenser so as to reduce the difference.
